# EUROPEAN PATENT APPLICATION

(11) **EP 2 385 231 A2**
(43) Date of publication of application: **09.11.2011**
(21) Application number: 11163999.3
(22) Date of filing: 28.04.2011
(51) Int. Cl.: F02B 37/18

(54) **Exhaust system for a combustion engine**

(30) Priority: 04.05.2010 SE 1050440; 23.02.2011 SE 1150155
(71) Applicant: Alpraaz AB, 260 83 Vejbystrand (SE)
(72) Inventor: von Koenigsegg, Christian, 260 83 Vejbystrand (SE)
(74) Representative: Holmberg, Nils Anders Patrik

(57) **Abstract**

The invention relates according to a first aspect to an exhaust system for interaction with a combustion engine, comprising a manifold (3) and a supercharger (4) which in its turn comprises a turbine housing (5) having a turbine seat, an outlet opening of said manifold (3) communicating with an inlet opening of the turbine housing (5), furthermore the exhaust system (1) comprises a catalytic exhaust emission control device comprising a first catalyst (9) and a second catalyst (10). According to the invention the first catalyst (9) communicates with an outlet opening of the turbine housing (5), and in that the exhaust system (1) comprises a bypass (11) having a first end that mouth in a point located upstream the turbine seat of the turbine housing (5), said second catalyst (10) and a second flow regulator (12) being arranged in the bypass (11), and a first flow regulator (8) being arranged downstream the point in which the first end of the bypass (11) mouth. According to a second aspect the present invention relates to a method for controlling such a exhaust system, and in a third aspect the present invention relates to a vehicle comprising a combustion engine and such a exhaust system.

## Description

### Technical field of the Invention

The present invention relates in general to an exhaust system for a combustion engine. In particular the present invention relates to a exhaust system for interaction with a combustion engine, comprising a manifold and a supercharger which in its turn comprises a turbine housing having a turbine seat, an outlet opening of said manifold communicating with an inlet opening of the turbine housing, furthermore the exhaust system comprises a catalytic exhaust emission control device comprising a first catalyst and a second catalyst. Catalytic exhaust emission control devices of the kind in question have the purpose of decreasing the quantity of harmful substances, for instance carbon monoxide, hydrocarbons, nitric oxides, etc., leaving a combustion engine during operation. According to a second aspect the present invention relates to a method for controlling such an exhaust system, and according to a third aspect the present invention relates to a vehicle comprising a combustion engine and such an exhaust system.

### Background of the Invention and Prior art

The present invention has its background in emission demands prescribed by national law, which require that adequate purification of the exhausts leaving a combustion engine during operation is attained. A conventional way of accomplishing exhaust emission control is to use a catalytic exhaust emission control device, which accelerates the chemical reactions taking place during combustion. A conventional catalyst reaches a good operational effect when it has a temperature at about 300°C. Thus, problem arises for instance in connection with cold starting if only one big catalyst is used, since a large amount of harmful components manage to pass the catalyst before sufficiently high temperature is obtained. In order to obtain a good exhaust emission control function having a adequate degree of purification even at cold starting it is since long known to use a catalytic exhaust emission control device comprising two catalysts, a main catalyst as well as a pre catalyst. The pre catalyst is located between the combustion engine and the main catalyst and is in general relatively small and dense, in relation to the main catalyst, in order to obtain a quick heating of the pre catalyst.

However, a troublesome disadvantage arise with vehicles having an exhaust system which in addition comprises a supercharger arranged between the combustion engine and the pre catalyst, as this counteract quick heating of the pre catalyst. Upon cold starting of such vehicles the supercharger will absorb a large amount of the heat that initially exists in the exhausts passing through the exhaust system. This entail that relatively cold exhausts will reach the pre catalyst delaying the heating thereof.

A known way of at least partly solve this disadvantage is to let a part of the exhaust flow bypass the supercharger via a bypass, which mouth upstream and downstream the supercharger, whereupon this part of the exhaust flow is not cold down by the supercharger.

Notwithstanding the problem connected to quick heating of the pre catalyst, there is always a disadvantage that the pre catalyst creates a big back pressure upstream thereof, more precisely due to the fact that the combustion engine at high power output creates large amounts of exhausts having a high flow speed that shall pass the supercharger, the pre catalyst and the main catalyst. The main catalyst is dimensioned to purify exhausts during such conditions, but due to the nature of the pre catalyst the exhausts are slowed down and the pressure upstream the pre catalyst will drastically increase. This entail among other things that the supercharger obtain a worse response upon acceleration, that the residual gas content in the working cylinders of the combustion engine is unfavorably high, as well as that at prolonged high power output the risk of damaging the pre catalyst is impending, i.e. that the pre catalyst is stressed resulting in that it is worn out prematurely and/or melts. Thus, a known compromise solution is to design the pre catalyst bigger and less dense than the theoretical optimum, which in its turn bring about that a large amount of expensive and complicated alternative solutions regarding control of combustion engines has been developed within the vehicle industry in order to reach the emission demands prescribed by law.

### Brief description of the object of the Invention

The present invention aims at obviating the aforementioned disadvantages and failings of previously known exhaust systems for combustion engines, and at providing an improved exhaust system. A primary object of the present invention is to provide an improved exhaust system of the initially defined type, which entail that a more optimal second catalyst, or pre catalyst, may be used at the same time as its life increases.

Another object of the present invention is to provide an exhaust system, in which the second catalyst does not affect the performance of the supercharger in a negative way during high power output from the combustion engine.

It is another object of the present invention to provide an exhaust system, which also contribute to decrease the residual gas content in the working cylinders of the combustion engine due to a decreased back pressure downstream the supercharger, which in its turn entail that the combustion engine may be controlled more optimally and thereby a more efficient combustion with accompanying high cylinder pressure in the combustion engine can be received.

### Brief description of the Invention

According to the invention at least the primary object is attained by means of the initially defined exhaust system, which is characterized in that the first catalyst communicating with an outlet opening of the turbine housing, and in that the exhaust system comprises a bypass having a first end that mouth in a point located upstream the turbine seat of the turbine housing, said second catalyst and a second flow regulator being arranged in the bypass, and a first flow regulator being arranged downstream the point in which the first end of the bypass mouth.

Thus, the present invention is based on the understanding that the second catalyst in the first place only is used when it is needed, i.e. until the combustion engine and the exhaust system have reached necessary operational temperature.

Preferred embodiments of the present invention are further defined in the dependent claims.

Preferably the exhaust system is arranged in such a way that the bypass comprises a second end that mouth in a point located downstream the turbine seat of the turbine housing, and it is even more preferred that the second end of the bypass mouth in a point upstream the first catalyst. This entail that one and the same first catalyst may be used for the entire exhaust flow quantity irrespectively of whether the exhaust flow pass through the supercharger or not. It is even more preferred that said first flow regulator is arranged upstream the point in which the second end of the bypass mouth.

According to an alternative embodiment said first flow regulator is arranged upstream the turbine seat of the turbine housing.

According to an alternative embodiment the bypass comprises a free second end. This entail in fact that two parallel exhaust systems are used, which may be optimized based upon different specifications independently of each other.

According to an alternative embodiment said second flow regulator is arranged upstream said second catalyst.

Preferably the first flow regulator is arranged to be closed when the instantaneous temperature of the second catalyst is lower than a predetermined temperature, and that the first flow regulator, when the instantaneous temperature of the second catalyst is equal to or higher than said predetermined temperature, is arranged to open when there is a need of supercharger pressure from an outlet opening of a compressor housing comprised in the supercharger. The advantage with this design is that a quick heating of the second catalyst takes place due to the fact that the entire exhaust flow quantity is lead through the same, as well as the combustion engine is spared due to the fact that activation of the supercharger is prevented before the combustion engine and the exhaust system are warm enough in order not to risk to be damaged at high power output.

According to a preferred embodiment the second flow regulator is arranged to be open when the pressure existing upstream said second flow regulator is higher than a predetermined value, and in that the second flow regulator is arranged to open when the supercharger pressure existing in the area of an outlet opening of a compressor housing comprised in the supercharger is higher than a predetermined value. In this way it is secured that the second flow regulator is opened when the first flow regulator is kept closed.

The object of the invention is also attained by means of the initially defined method, which is characterized in that upon start and during subsequent initial operation of a combustion engine interacting with the exhaust system the first flow regulator is kept closed at the same time as the second flow regulator is opened, direct or indirect, of the pressure existing upstream said second flow regulator, in order to achieve quick heating of the second catalyst to a temperature equal to or higher than a predetermined temperature, said first flow regulator, when the instantaneous temperature of the second catalyst is equal to or higher than said predetermined temperature, being allowed to open when there is a need of supercharger pressure from an outlet opening of a compressor housing comprised in the supercharger.

Preferably the second flow regulator is opened when the supercharger pressure existing in the area of an outlet opening of a compressor housing comprised in the supercharger is higher than a predetermined value.

Further advantages and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic image of a preferred embodiment of the inventive exhaust system,
- Fig. 2: is a schematic image of an alternative embodiment of the inventive exhaust system, and
- Fig. 3: is a schematic image of yet another alternative embodiment of the inventive exhaust system.

### Detailed description of the Invention

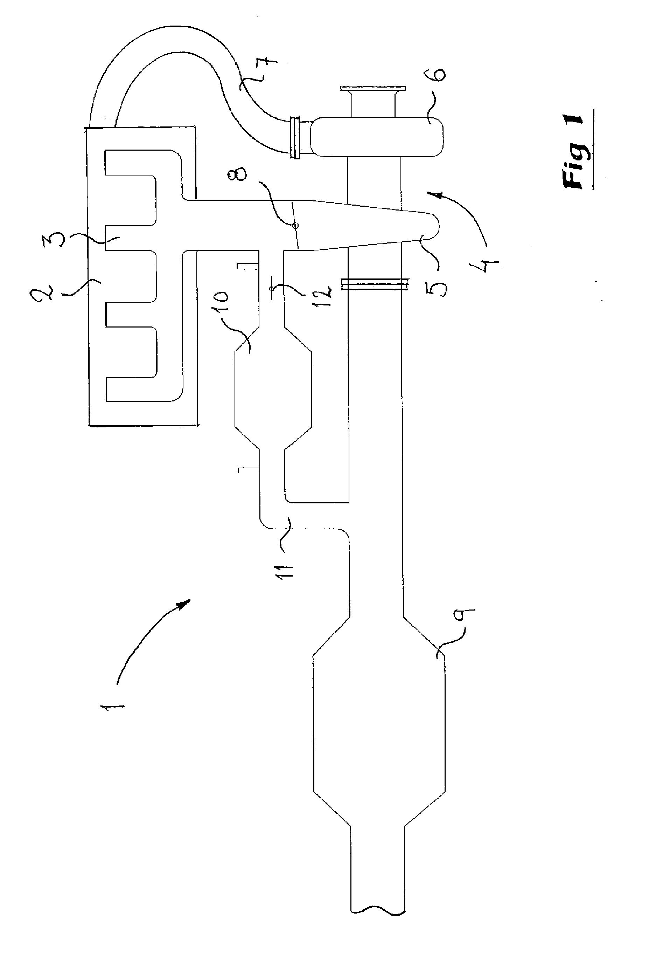

Reference is consistently made to figure 1 if not stated otherwise. The present invention relates in general to an exhaust system, generally designated 1, arranged to interact with a combustion engine 2 in a vehicle (not shown). The term vehicle means primarily cars, trucks, motor cycles, etc. The exhaust system 1 extends from the combustion engine 2 to a free terminating end (not shown), through which the purified exhausts are meant to be released. It shall be pointed out that the exhaust system 1 may also comprise several free terminating ends. It shall also be pointed out that the exhaust system 1, in addition to what is shown in the figures, may be connected to for instance one or more silencers and/or other components, e.g. filters.

According to the invention the exhaust system 1 comprises a manifold 3, a supercharger 4, also known as a turbocharger, and a catalytic exhaust emission control device. Said manifold 2 communicating in a conventional way with, i.e. is in fluid communication with, the working cylinders of the combustion engine 2. Thus, the manifold 3 is arranged to collect and lead away the exhausts created during operation of the combustion engine 2 and flowing out off said working cylinders. It shall be pointed out that said manifold 3 may be constituted by a common pipe interacting with all of the working cylinders or by several separate pipes each interacting with one or several working cylinders or a mixture thereof, which is dependent on the type of the supercharger 4 used. Thus, it shall be pointed out that the present invention is not limited by any specific embodiment of the manifold arrangement.

Furthermore, an outlet opening of said manifold 3 is communicating with, i.e. is in fluid communication with, an inlet opening of a turbine housing 5 comprises in the supercharger 4. The turbine housing 5 comprises a turbine seat arranged to house a rotatably arranged turbine (not shown), which in its turn is connected to and drive a compressor impeller (not shown) that is rotatably arranged in a compressor housing 6 comprised in the supercharger 4. Said compressor is arranged to overcharge the intake air of the working cylinders of the combustion engine 2. An outlet opening of the compressor housing 6 is communicating with, i.e. is in fluid communication with, the combustion engine 2 via a conventional pipe system 7 leading the air that is overcharged by the supercharger 4 to the working cylinders of the combustion engine 2.

In a preferred embodiment of the turbine housing 5 it comprises a race extending from said inlet opening to said turbine seat. Thus, the race is arranged to lead the exhausts from the inlet opening to the turbine seat and the turbine. Furthermore, said race comprises a first spiral chamber that mouth in said turbine seat and a second spiral chamber that mouth in said turbine seat. It is essential for this preferred turbine housing that both the first spiral chamber and the second spiral chamber mouth in a large angular segment of the turbine seat without mutual communication, the axial height of the mouth into the turbine seat of the second spiral chamber in said angular segment being bigger in the end of the angular segment than in the beginning thereof seen in a flow direction. It shall be realized that also other types of turbine housings 5 may be used and that the present invention is not limited to comprise the preferred turbine housing 5.

According to a preferred embodiment of the invention a first flow regulator 8 is arranged in the exhaust system 1 upstream the turbine seat of the turbine housing 5. Said first flow regulator 8 is movably arranged between a the turbine housing 5 closed position and a the turbine housing 5 open position. It shall be pointed out that the first flow regulator 8 preferably also may occupy any position between the closed position and the open position. It shall be pointed out that said first flow regulator 8 may be constituted by several separate flow regulators in the case when the turbine housing 5 of the supercharger 5 comprises several spiral chambers. The first flow regulator 8 is in the shown embodiment turnably movable between the closed position and the open position, and is preferably maneuverable by means of a suitable link arrangement (not shown), however any equivalent maneuvering is conceivable. Opening and closing of the first flow regulator 8 is for instance connected to the engine speed of the combustion engine, a position and/or movement of a throttle lever, existing exhaust pressure in the turbine housing 5 or in any other suitable part of the exhaust system 1, etc. According to an alternative embodiment the first flow regulator is designed as a pressure controlled non-return valve (not shown), that automatically opens when a specific pressure is obtained at the inlet opening of the turbine housing 5, for example.

Furthermore the inventive exhaust system 1 comprises a catalytic exhaust emission control device comprising a first catalyst 9 and a second catalyst 10, the first catalyst 9 communicating with, i.e. is in fluid communication with, an outlet opening of the turbine housing 5. Said second catalyst 10 is arranged in a bypass 11 comprised in the exhaust system 1, which bypass 11 comprises a first end that mouth in a point located upstream the turbine seat of the turbine housing 5, a second flow regulator 12 being arranged in the bypass 11. Preferably the second flow regulator 12 is arranged in the bypass 11 upstream the second catalyst 10. Said second flow regulator 12 is movably arranged between a the bypass 11 closed position and a the bypass 11 open position. It shall be pointed out that the second flow regulator 12 preferably may occupy any position between the closed position and the open position as well.

Preferably said second flow regulator 12 is a maneuverable type. The second flow regulator 12 is in the shown embodiment turnably movable between the closed position and the open position, and is preferably maneuverable by means of any suitable link arrangement (not shown), however any other equivalent maneuvering is conceivable. The second flow regulator 12 may for instance be constituted by a pressure controlled non-return valve that automatically opens at a predetermined pressure, or it may be constituted by a maneuverable valve that for instance is maneuvered by an electrically or pneumatically controlled actuator, or it may be constituted by a combination thereof.

Thus, the inventive exhaust system 1 is arranged in such a way that the bypass 11 primarily is used at cold starting of the combustion engine 2, whereupon the initial exhausts are bypassed the supercharger 4, via the bypass 11 and the second catalyst 10, in order to obtain quick heating of the second catalyst 10 when the exhausts is not chilled by the supercharger 4.

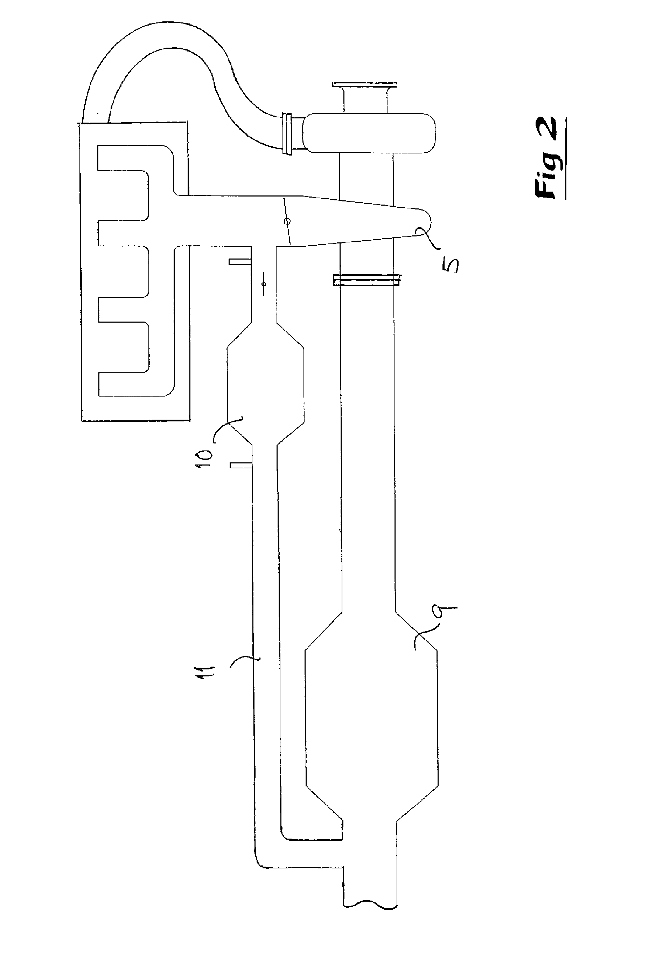

The bypass 11 comprises also a second end, which according to a preferred embodiment mouth in a point downstream the turbine seat of the turbine housing 5, as is shown in figures 1 and 2. It shall be pointed out that the inventive exhaust system 1 may also comprise a second supercharger (not shown), the turbine housing of which is arranged downstream the turbine housing 5 of the first supercharger 4. In this embodiment the second end of the bypass 11 may mouth upstream as well as downstream the turbine housing of the second supercharger.

In the preferred embodiment according to figure 1 the second end of the bypass 11 mouth in a point located upstream the first catalyst 9, which entail that an as large amount as possible of the components of the exhaust system 1 is used for the entire exhaust flow quantity.

It shall be pointed out that the first flow regulator 8 may be located downstream the turbine seat of the turbine housing 5, and in the case the second end of the bypass 11 mouth in a point located downstream the turbine seat of the turbine housing 5 the first flow regulator 8 shall be arranged upstream this point.

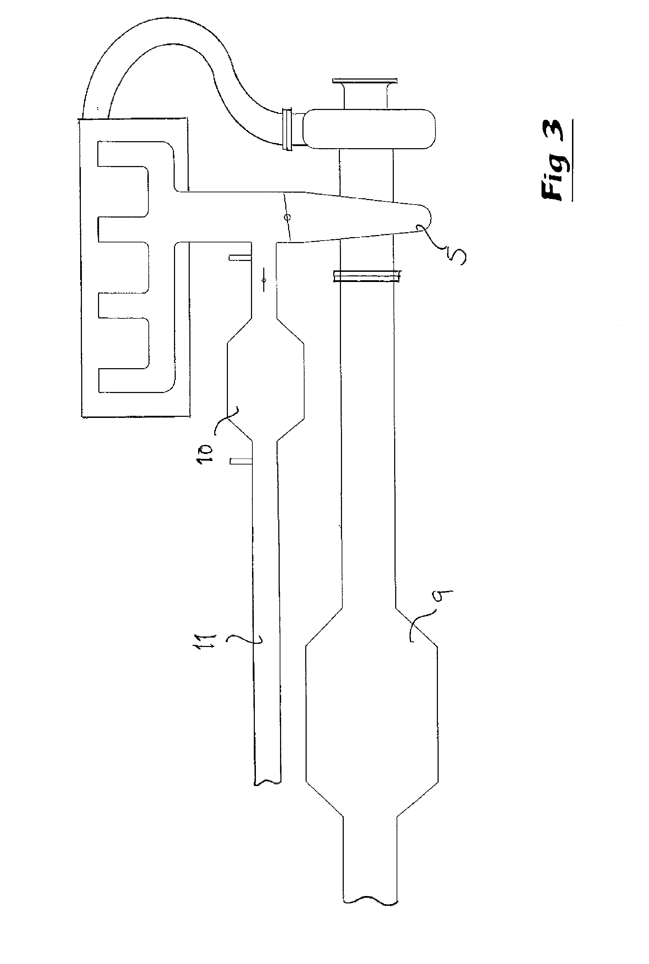

In an alternative embodiment, shown in figure 3 the bypass 11 comprises a free second end. By other words this entail that the exhaust flow quantity that is lead via the bypass 11 will not be mixed with the exhaust flow quantity that is lead via the turbine housing 5 of the supercharger 4. This entail that the two parallel terminations of the exhaust system 1 may be optimized based on different specifications, i.e. for so called cold starting and for so called normal operation, respectively.

It shall be pointed out that the exhaust system 1, downstream the turbine housing 5 and/or in the bypass 11, may comprise further catalysts, filters, silencers, etc. (not shown) independent of where the second end of the bypass 11 mouth.

In one embodiment the bypass 11 and said second catalyst 10 are fixedly connected to and constitute a part of said turbine housing 5, which however require a somewhat more complicated turbine housing 5.

According to a preferred embodiment of the present invention the first flow regulator 8 is arranged to be closed when the instantaneous temperature of the second catalyst 10 is lower than a predetermined temperature, and that the first flow regulator 8, when the instantaneous temperature of the second catalyst 10 is equal to or higher than said predetermined temperature, is arranged to open when there is a need of supercharger pressure from the compressor housing 6 of the supercharger 4 to the combustion engine 2. This entail that in practice that the supercharger 4 is closed until the exhaust system 1 obtained an adequate temperature in order to purify the exhausts in a proper way, thereafter the supercharger 4 is allowed to work when the combustion engine 2 need overcharged air in connection with high power output. It shall be pointed out that alternatively the temperature in any other essential part of the exhaust system 1, for instance the first catalyst 9, may be decisive for when the first flow regulator 8 shall be kept closed. Thereto a minimum period of time of how long the first flow regulator 8 shall be kept closed may be set in order to secure that the combustion engine 2 and the exhaust system 1 have obtained high enough temperatures in order not to risk to get damaged at high power output from the combustion engine 2 supported by the supercharger 4.

According to the invention the following steps takes place upon start and during subsequent initial operation of a combustion engine 2 and the exhaust system 1. The maneuverable first flow regulator 8 is kept closed at the same time as the second flow regulator 12 is opened, direct or indirect, by the pressure existing upstream said second flow regulator 12, in order to obtain quick heating of the second catalyst 10 to a temperature that is equal to or higher than a predetermined temperature. Furthermore, the first flow regulator 8 is allowed, when the instantaneous temperature of the second catalyst 10 is equal to or higher than said predetermined temperature, to open when there is a need of supercharger pressure from the compressor housing 6 of the supercharger 4.

At the following operation of the combustion engine 2 and the exhaust system 1 it is preferred that the second flow regulator 12 is opened when the supercharger pressure existing in the area of the outlet opening of the compressor housing 6 of the supercharger 4 is higher than a predetermined value in order to obtain more propitious operational conditions across the supercharger 4.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

It shall also be pointed out that all information about/concerning terms such as above, below, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

## Claims

1. Exhaust system for interaction with a combustion engine, comprising a manifold (3) and a supercharger (4) which in its turn comprises a turbine housing (5) having a turbine seat, an outlet opening of said manifold (3) communicating with an inlet opening of the turbine housing (5), furthermore the exhaust system (1) comprises a catalytic exhaust emission control device comprising a first catalyst (9) and a second catalyst (10), **characterized in that** the first catalyst (9) communicating with an outlet opening of the turbine housing (5), and **in that** the exhaust system (1) comprises a bypass (11) having a first end that mouth in a point located upstream the turbine seat of the turbine housing (5), said second catalyst (10) and a second flow regulator (12) being arranged in the bypass (11), and a first flow regulator (8) being arranged downstream the point in which the first end of the bypass (11) mouth.

2. Exhaust system according to claim 1, wherein the bypass (11) comprises a second end that mouth in a point located downstream the turbine seat of the turbine housing (5).

3. Exhaust system according to claim 2, wherein the second end of the bypass (11) mouth in a point located upstream the first catalyst (9).

4. Exhaust system according to claim 2 or 3, wherein said first flow regulator (8) is arranged upstream the point in which the second end of the bypass (11) mouth.

5. Exhaust system according to any of the claims 1-4, wherein said first flow regulator (8) is arranged upstream the turbine seat of the turbine housing (5).

6. Exhaust system according to claim 1, wherein the bypass (11) comprises a free second end.

7. Exhaust system according to any of claims 1.6, wherein said second flow regulator (12) is arranged upstream said second catalyst (10).

8. Exhaust system according to any of claims 1-5, wherein said bypass (11) and said second catalyst (10) are fixedly connected to and constitute a part of said turbine housing (5) .

9. Exhaust system according to any preceding claim, wherein the first flow regulator (8) is arranged to be closed when the instantaneous temperature of the second catalyst (10) is lower than a predetermined temperature, and in that the first flow regulator (8), when the instantaneous temperature of the second catalyst (10) is equal to or higher than said predetermined temperature, is arranged to open when there is a need of supercharger pressure from an outlet opening of a compressor housing (6) comprised in the supercharger (4).

10. Exhaust system according to any preceding claim, wherein the second flow regulator (12) is arranged to be open when the pressure existing upstream said second flow regulator (12) is higher than a predetermined value, and in that the second flow regulator (12) furthermore is arranged to open when the supercharger pressure existing in the area of an outlet opening of a compressor housing (6) comprised in the supercharger (4) is higher than a predetermined value.

11. Exhaust system according to any of claims 1-6, wherein said second flow regulator (12) is a maneuverable flow regulator.

12. Method for controlling an exhaust system according to any of the claims 1-11, **characterized in that** upon start and during subsequent initial operation of a combustion engine interacting with the exhaust system (1) the first flow regulator (8) is kept closed at the same time as the second flow regulator (12) is opened, direct or indirect, of the pressure existing upstream said second flow regulator (12), in order to achieve quick heating of the second catalyst (10) to a temperature equal to or higher than a predetermined temperature, said first flow regulator (8), when the instantaneous temperature of the second catalyst (10) is equal to or higher than said predetermined temperature, being allowed to open when there is a need of supercharger pressure from an outlet opening of a compressor housing (6) comprised in the supercharger (4).

13. Method according to claim 12, wherein the second flow regulator (12) is opened when the supercharger pressure existing in the area of an outlet opening of a compressor housing (6) comprised in the supercharger (4) is higher than a predetermined value.

14. Vehicle comprising a combustion engine and an exhaust system interacting with said combustion engine, the exhaust system comprising a manifold (3) and a supercharger (4) which in its turn comprises a turbine housing (5) having a turbine seat, an outlet opening of said manifold (3) communicating with an inlet opening of the turbine housing (5), furthermore the exhaust system (1) comprises a catalytic exhaust emission control device comprising a first catalyst (9) and a second catalyst (10), **characterized in that** the first catalyst (9) communicating with an outlet opening of the turbine housing (5), and **in that** the exhaust system (1) comprises a bypass (11) having a first end that mouth in a point located upstream the turbine seat of the turbine housing (5), said second catalyst (10) and a second flow regulator (12) being arranged in the bypass (11), and a first flow regulator (8) being arranged downstream the point in which the first end of the bypass (11) mouth.
